# EUROPEAN PATENT SPECIFICATION

(11) **EP 1 639 843 B1**
(45) Date of publication and mention of the grant of the patent: **20.01.2010**
(21) Application number: 03738383.3
(22) Date of filing: 30.06.2003
(51) Int. Cl.: H04W 76/02, H04W 88/02

(54) **METHOD AND DEVICE FOR AUTOMATICALLY CONNECTING A MOBILE TERMINAL DEVICE TO A CELLULAR NETWORK SERVER BY MEANS OF AN INTERCHANGEABLE MEMORY**
VERFAHREN UND VORRICHTUNG ZUM AUTOMATISCHEN VERBINDEN EINES MOBILEN ENDGERÄTES MIT EINEM MOBILTELEFONNETZSERVER MITTELS EINES AUSWECHSELBAREN SPEICHERS
PROCEDE ET DISPOSITIF DE CONNEXION AUTOMATIQUE D'UN TERMINAL MOBILE A UN SERVEUR DE RESEAU CELLULAIRE AU MOYEN D'UNE MEMOIRE INTERCHANGEABLE

(43) Date of publication of application: 29.03.2006
(73) Proprietor: Nokia Corporation, 02150 Espoo (FI)
(72) Inventor: NEVALAINEN, Mikko, 44628 Herne (DE)
(74) Representative: Higgin, Paul
(86) International application number: PCT/IB2003/002532
(87) International publication number: WO 2005/002254

(56) References cited:
- EP-A2- 1 066 867
- US-A- 5 862 220
- US-A1- 2003 095 525

## Description

The present invention relates to an online access of a mobile terminal to a multiple access online application. More specifically the present invention relates to a method and a device for simplifying the access to such online applications by usage of interchangeable memories that can be connected to said terminal. The present invention is also related to hotswappable memory cards, which can be inserted/changed to the terminal device without powering a device off. The invention is further related to a simplified set up of online application for users having matching preference profiles for accessing said application.

The invention is based on the background problem of bringing together the participants of a multiple access online application in case of a wireless communication network online game.

Procedures to perform different multiple access online applications are provided by the example of online games in EP 1 066 867 and EP 1 066 868. The document EP 1 066 867 describes generally the procedures necessary to perform such an online game. The document EP 1 066 868 discloses procedures necessary to perform such an online game with using a low power radio link between the single user devices. None of the documents discloses a procedure on how a number of players can be acquired to simultaneously start a game round. The document EP 1 066 868 discloses one approach by which a user can leave and/or join a running game.

From document US 2003095525 a navigation control unit for a wireless computer resource access device, such as a wireless web content access device is known. The navigation control unit of US 2003095525 includes a microprocessor that stores information regarding the navigation control unit and also processes user input received from a user that may be provided by any number of user input devices, such as button switches, voice activated commands, touch sensitive displays, and the like. The navigation control unit may be embodied as various components to be coupled with the wireless web content access device, such as a hands-free headset, a replaceable and rechargeable battery, a replaceable face plate, incorporated as hardware and/or software within the wireless device, etc. Furthermore, the navigation control unit may include additional functionality, such as audio source or playback devices, memory, positioning systems, biometric readers, data collection devices, etc. The navigation control unit may be separated into two portions, one of which is coupled to the wireless web content access device, and the other of which is a separate portion that communicates wirelessly with the first portion.

When wanting to initiate a multiple access online application, a user still needs to access menus and connect to networks in order to find a gaming partner. It requires extra effort which represents an obstacle or threshold, which may prevent non-technically skilled users from getting into multiplayer gaming.

Conventionally, multiplayer games require a manually performed search for a gaming partner.

The participants in multiple access online applications such as online games usually do not know each other. The problem to solve is to provide a possibility to connect the users that like to participate in an online game on the basis of similar preferences.

Both cited documents fail to disclose an easy way to lower the threshold for using multiple access online application. Both documents also fail to disclose a way in which a number of people not knowing each other and therefore not able to arrange a participation in a multiple access online application can play for themselves.

It is therefore desirable to simplify the access to multiple access online applications for the respective user such that the user encounters no problem in finding and connecting the appropriate server.

It is therefore desirable to have a possibility to bring the users together who like to participate in multiple access online applications on the basis of similar or identical preferences.

It is further desirable to provide a possibility for users to connect to the server and find a partner having basically the same preferences and the same gaming strength.

This is achieved according to aspects of the invention, by a method for automatically connecting a mobile terminal device to a remote cellular network server according to claim 1 and by a mobile terminal device for automatically connecting to a remote cellular network server having a server network address according to claim 10. Preferred embodiments of the present invention are disclosed in the dependent claims 2 to 9 and 11 to 14.

According to a first aspect of the present invention, there is provided a method for automatically connecting a mobile terminal device to a remote cellular network server. The mobile terminal device comprises an interface for connecting an interchangeable memory and has a cellular network interface, wherein a network address of said server can be retrieved.

The method comprises the steps of detecting that an interchangeable memory has been connected to said mobile terminal, retrieving said network address of said server and setting up a connection to said server via said network.

The server is destined to provide a multiple access online application for a plurality of mobile terminal devices each being connected to a wireless communication network and being related to users. At the server different applications may be started.

The interchangeable memory device can be "hotswappable" i.e. a memory device can be inserted/changed to the terminal device without powering the terminal off. When a user wants to initiate a multiplayer game, the user no longer needs to access menus and connect to the network in order to find an appropriate server and gaming partner. There is no extra effort required and therefore even non-technically orientated users may easily get access to multiplayer gaming.

The present invention does not specify the type of the server, so the server can be an appropriate server that is specialized for finding game partners e.g. for multiplayer online gaming.

In one example embodiment said server address is stored in said interchangeable memory and can be retrieved via said interface for connecting an interchangeable memory, from said interchangeable memory. By storing the server address in said interchangeable memory, a server that fits to an application software (or data) stored in said memory can automatically be selected / connected. Another advantageous application resides in a coded access to a server with a restricted access, wherein the inserted interchangeable memory device acts like a key storing an access code for accessing a server. This solution can be applied in case of network games, e.g. if the game is supposed to contact a server which actually holds parts of the game.

In another example embodiment of said method, said server address is stored in a memory within said mobile terminal device, and can be retrieved directly from said memory within said terminal. By storing the server address within said mobile terminal device, e.g. in a storage in said terminal device, a default server of the operator can be selected. In game applications where actually the network only notifies of available players and the players connect directly into each others addresses, the connected default server would be connected substantially independently of the actual application stored in said interchangeable memory device.

It is also envisaged to store a default server address in said terminal and one in said interchangeable memory, wherein a user may select or choose the preferred contact address by changing the settings in the device and/or the module.

Another example embodiment further comprises the activating and operating of a cellular network application in an online mode. This application can e.g. be stored in said interchangeable memory module.

A basic implementation of the invention may reside in a server-based application, wherein the terminal device only gets access to a server applications via an online connection of a cellular communication network or a cellular telephone network. The memory module acts like a remote key to access or remote control an application running on said remote server. The activation may be performed by connecting to a server address granting a wide access to said cellular network application.

In case that the application is stored in said interchangeable memory module, the activation can comprise the loading of a Cellular Network Game (CNG) software or a CNG access software into said terminal device (TD) or onto a processor of said TD. The activation may also be performed by running said software on said interchangeable memory device (which may require a dedicated processor in said memory or execution module).

An advantage compared to earlier solutions is that basically users would not have to take any actions when wanting to initiate a multiplayer game except the insertion of the correct card to the device. Certainly the setting would have to be still set. This would save user's time and make it easier for the users who are not aware of how the multiplayer game actually is initiated.

The memory device insertion is recognized, and can therefore be used to trigger some actions. In the present invention it is used to launch and operate the application stored on the memory device.

In another example embodiment of the present invention said interchangeable memory stores application ID data of said cellular network application and the application ID data are retrieved and transferred to said connected server.

The memory device is already identified and special actions can be taken accordingly. After the detection of the insertion the game ID and e.g. additional information such as the version number can be sent to the network server, when the game memory device is inserted. Network server could then e.g. automatically match the different users that have the same game inserted for multiplayer gaming. Certainly this would be most beneficial under a specific setting so that the user is not forced to do it. Removing the card/disabling the setting would erase the flag on the network that only the players that are actually willing to play and have the right card inserted would be involved.

In another additional embodiment of the present invention, the method further comprises operating a user confirmation request for setting up a connection to said server address via said network, and setting up a connection to said server address via said network, only if said requested user confirmation is detected.

The confirmation request may comprise e.g. displaying a request on a display of said terminal. The confirmation request may comprise a request to a setting menu for a respective flag. As it may be expected that the use of an online game may be charged, e.g. for providing the online connection, it may be useful that a user is specifically informed before a billable service is invoked.

It may also be possible that the user prefers to play an offline mode of said game, wherein no expenses are involved.

In yet another example embodiment said method further comprises the determining of preference data of a user for said cellular network application, and storing said preference data within said interchangeable memory. The determination of the preference data may be performed by requesting a server, menu settings or data acquired during a setup of said online application menu.

In another example embodiment said method further comprises retrieving of preference data of a user for said cellular network application stored in said interchangeable memory, and transferring said preference data to said connected server. By using preference data of users that are transferred to a server the server may be able to select matching groups of online users for a multi-user online application, without the need that a user has to enter his preferences at each setting up of an online connection. The preference data can be used when connecting a game server or mediation server.

The insertion of a valid memory device will preferably also send a signal to the network to start searching for gaming partner automatically. Network server could then e.g. automatically match the different users by their preference data and the game ID, who have the same game inserted for multiplayer gaming. It may be beneficial to do this automatically under a specific setting so that a user is not forced to do it. Removing the card/disabling the setting could erase the flag on the network that only the players that are actually willing to play and have the right card inserted would be involved. As the server can access all data necessary to put together matching game teams, the server can inform the potential player at the best possible point in time to invite them for a game or a competition.

In an example embodiment said cellular network application is a cellular network game. Nowadays game applications for cellular telephones and other cellular network communication terminals require a relatively low amount of memory space, and games may be downloaded via a cellular communication network from servers such as Java applications. However to install more sophisticated, more complex high-quality games in a mobile cellular terminal it may be provisioned to deliver these game software stored on an interchangeable storage media. The storage media can e.g. be a multi media card (MMC). This memory module based game software may be known from (portable) game consoles. In connection with a cellular terminal the present invention provides the possibility that users may play against each other even via much larger distances and without the need to care about the connection or the right selection of a game partner. The connection is set up automatically and the game partner may be selected from a remote server.

It is possible to play against each other e.g. by transferring only the moves of the game via cellular network, so that each terminal, can generate the whole game situation online an essentially in real-time.

The problem the user has formerly been confronted with resides in that he does not know which server to connect to find a game partners is solved by the present invention as the device itself chooses and connects an appropriate server, when the user inserts the memory (interchangeable).

Together with the setup of the connection to a server e.g. a version number and the ID number of the game, and optionally an ID of the user may be transferred to the server.

A game ID number may code the title and the version of a game. A game ID number may also code a unique serial number of said game. This may especially prove useful when fighting piracy, as the identity of a game can be related to the identity of a phone and to the identity of a SIM card. In case that two different games with the identical serial ID number are detected at the server, the online access may be interrupted and the user or game ID number may be excluded from further online or server access. This may be combined with a request to have the memory module replaced or repaired, so the owner of the original module may receive a replacement with a new serial number.

The memory may also provide the access data to a server or provide a hint which server is to be connected. The whole process may require a number of user confirmation steps.

In another example embodiment said method further comprises determining of game status data of said cellular network game, and storing said data in said interchangeable memory.

In this embodiment it may be expected that each user terminal requires a memory module to participate at the online game. It may also be required that each of said memory modules has to store and contain at last the terminal part of the game software to participate at a CNG (cellular network game).

In another example embodiment said method further comprises retrieving of game status data of a user for said cellular network game stored in said interchangeable memory, and transferring said preference data to said connected game server.

By storing the actual game status data it is possible to store the game status of a running game in case that the online connection is disturbed or interrupted, which may easily happen when using the game on travel. Game status data storage can provide an increased play capacity even in case of fading connection conditions caused by using tunnel subways. Game status data storage can also provide a memory module functionality in case the game is played in an offline mode. The stored game status may comprise data such as actual gaming level, number and addresses of possible competitors etc.

All the preceding methods may also be demoted as a pull and push procedure wherein data (e.g. the server address and preference data) is pulled from the memory device and pushed to the server.

According to another aspect of the present invention a method is provided for automatically operating a cellular network application from an interchangeable memory device. The method comprises detecting a mobile terminal that is or will be connected to said interchangeable memory, retrieving a network address of a cellular network server and a script to induce said connected terminal to set up a network connection to said server address, and transferring said server address and said script to said connected terminal.

These methods may also be demoted as a push and push procedure wherein data (e.g. the server address and preference data) is pushed from the memory device and pushed to the server.

In another example embodiment said method further comprises retrieving of preference data of a user for said cellular network application, and transferring said preference data to said connected terminal. It may be noted the preference data may previously be stored on said memory module (maybe even as default settings). It may be noted the preference data may be related to one or more than one different users. It may be noted the preference data may also comprise a script to connect a preferred (user selectable) game server.

In yet another example embodiment said method further comprises activating and operating said cellular network application that is stored on said interchangeable memory in an online mode.

In another example embodiment said cellular network application is a cellular network game. By using a cellular network game stored in a memory device the invention provides memory module based multiplayer games. It is suggested that the game details are transferred to a network server upon insertion of the game card. This way the server is aware of game units with the same installed (or available games) and potential game participants can be selected and notified easily.

It may also be possible to execute the game software at the memory module.

According to yet another aspect of the invention, a software tool is provided comprising program code means for carrying out the method of the preceding description when said program product is run on a computer or a network device.

According to another aspect of the present invention, a computer program product downloadable from a server for carrying out the method of the preceding description is provided, which comprises program code means for performing all of the steps of the preceding methods when said program is run on a computer or a network device.

According to yet another aspect of the invention, a computer program product is provided comprising program code means stored on a computer readable medium for carrying out the methods of the preceding description, when said program product is run on a computer or a network device.

According to another aspect of the present invention a computer data signal is provided. The computer data signal is embodied in a carrier wave and represents a program that makes the computer perform the steps of the method contained in the preceding description, when said computer program is run on a computer, or a network device.

According to yet another aspect of the present invention a terminal device for automatically connecting to a remote cellular network server is provided. The network server is supposed to provide a multiple access online application destined for a plurality of mobile terminal devices each being connected to a wireless communication network. The terminal device comprises a cellular network interface, a user interface, a processor that is connected to said network interface and said user interface, an interface for connecting an interchangeable memory, a detector for detecting an interchangeable memory, a component for retrieving a server address and a component for connecting to said server or server address.

The interface may be a wireless communication network interface for exchanging data with at least one server at a server address or other terminals connected to said wireless communication network. The user interface can comprise a display and user input components such as keypad, keyboard, a joystick or the like. The processor is connected to said network interface and said user interface. The device further comprises an interface for connecting an interchangeable memory. The device further comprises a detector for detecting a connection of said interchangeable memory, a component for retrieving said server address and a component for connecting to said server via said cellular network interface.

The detector for detecting a connection of said interchangeable memory involves a hotswap capability, a feature where an auxiliary device can be inserted/changed to the device without turning power off. As the insertion of the memory device is recognized, this can also trigger some actions. The insertion of an interchangeable memory device can also send a signal to the network to start searching for gaming partner automatically.

It is also possible to provide a separate payment database within said memory module in a way that the prize the players are fighting for may be a free bonus game, a free connection or other valuable privileges.

In another example embodiment said interface for connecting an interchangeable memory is an interface for connecting a interchangeable memory that comprises said address of a server and said component for retrieving said server address is adapted to retrieve said server address from said interchangeable memory. This enables the device to connect automatically a server that is related to the contents of said connected memory module.

In another example embodiment said mobile terminal device further comprises a storage that stores said address of said server. The storage is connected to a processor of said mobile terminal device. The component for retrieving said server address is adapted to retrieve said server address from said storage. Thereby, the server address can be retrieved while the connection of the interchangeable memory device is actually being detected, without the need to wait until the memory device is fully recognized or a memory access to the interchangeable memory is set up. By storing the server address within said mobile terminal device e.g. a default server of the operator can be selected. This may be advantageous in cases in which the network only notifies of available players and the players connect directly into each others addresses.

In another example embodiment said terminal device is further configured to retrieve application ID data of said cellular network application stored in said connected interchangeable memory and transferring said application ID data to said connected server. It is also possible to retrieve the ID data of the memory module.

This may be combined with a method for notifying users (that are identified e.g. by a user or device ID or by the ID data of the memory module) having a matching preference profile with at least one other user, for accessing a multiple access online application destined for a plurality of mobile terminal devices each being connected to a wireless communication network and each being related to users is provided. The mobile terminal device is related to a single user, wherein said mobile terminal device is connected to a wireless communication network server upon the insertion of a memory module in said terminal. The method comprises sending a preference profile including identification (ID) data and preference data of said user, both retrieved from said memory module, automatically to a server connected to said wireless communication network, via said network. The method further comprises receiving a notification from said connected or notified server via said network, wherein said notification comprises an offer to get access to said multiple access online application according to said preference data. Said notification comprises data to enable an access of said mobile terminal device to said multiple access online application. This may be embodied e.g. as the deliverance of a network address (e.g. a telephone number) of a possible gaming partner. This may also be embodied e.g. as the deliverance of a game number and a server address in case of a server-based multiple access online application.

This determining and notifying of users having a matching preference profile is best performed together with a respectively configured cellular network server. Said preference profile is destined for accessing a multiple access online application destined for a plurality of mobile terminal devices that each are connected to a wireless communication network and that each are related to said users. The network server comprises an interface, a user database and a processor. The interface is provided to connect the server to a wireless communication network for enabling the server to receive and send data to and from terminal devices connected to said wireless communication network. The user database is provided to store data i.e. user ID data and user preference data received from said terminal devices via said wireless communication network and said interface. The processor is connected to said interface and said database to process said received data and to send and receive data and notifications.

The interface is configured to receive at least one preference profile including ID data and preference data from at least one mobile terminal. The database is configured to store said data received via said interface in a user database. Further there is provided a component for comparing said received preference data with preference data of said at least one other user stored in said database for groups of matching preference data, and a component for determining a plurality of users having matching preference data. Further there is provided a component for sending a notification to each of said mobile phones having matching user preference data, if matching preference data have been found.

In another example embodiment said terminal device is further configured to activate an online application of said memory device, if and when said interchangeable memory is detected.

In another additional example embodiment said interface for connecting an interchangeable memory is an interface of a multimedia card. Thereby, a memory module with standardized dimensions may be used without a need to develop new kinds of mechanic or electric interface structures.

In yet another additional example embodiment wherein said cellular network application is a cellular network game. The device may also be denoted as a cellular enabled portable game console.

According to yet another aspect of the present invention an interchangeable cellular memory device is provided. The interchangeable cellular memory device comprises an interface for connecting to a mobile terminal device, a data storage for storing at least one address of a server, and a reader for retrieving said server address from said data storage. Preferably the interchangeable memory comprises a data-storage containing a script for inducing said terminal device to connect to said server. Preferably said interchangeable memory also contains a storage controller for transferring said script and said server address to said mobile terminal.

To fit into the above-described terminal devices the interchangeable cellular memory device may be hotswappable.

In another example embodiment said interchangeable cellular memory device further stores and contains a cellular network application, software or script. In a similar embodiment the memory device can recognize the insertion into a respective terminal device, which can also be used to trigger some actions. It may e.g. be used to launch either by a push or a pull process from the terminal an application on the memory device, if settings are set correctly.

In yet another example embodiment of said interchangeable cellular memory device said data storage further stores application ID (Identification) data of said cellular network application. The ID may be an application ID, a memory device ID or may even represent a user ID. It may also be possible to retrieve and store the terminal device ID or a SIM (Subscriber Identification Member) card ID from said terminal device.

In another example embodiment said interchangeable cellular memory device further stores at least one set of preference data related to the application preferences of a user of said application.

The preference data can be used for determining and notifying users having a matching preference profile, for accessing a multiple access online application in a wireless communication network. The multiple access online application is destined for a plurality of mobile terminal devices each being connected to a wireless communication network and being related to said users each provided with a memory module according to the present invention. The usage of preference data comprises receiving, saving comparing of preference data and determining similar preference data and notifying the users which have been determined to have matching preference profiles.

By receiving said preference profile including identification (ID) data and preference data related to at least one of said users, from at least one of said mobile terminals, a database can be put up. The ID data and said preference data can be transferred simultaneously or subsequently within a one step or a multi-step data exchange. The use of the ID data should be basically clear, e.g. to prevent the occurrence of "double personalities", i.e. that a user is provided with a double set of entries in the data database, and to prevent that the server suggests a user to play against himself. The preference data can be (in regard to multiplayer online game applications) e.g. the game itself, the gaming strength, preferred virtual characters in role-play games or preferred virtual persons or teams (or clubs).

It may be noted that in the following the expression 'server' is used to denote a server device and a server functionality, wherein said functionality may also be provided by in a terminal device, therefore the server may be actually a terminal device related to a user.

These received ID data and said received preference data are then saved in a user database, for further access, wherein user database contains preference data of at least one other user. The higher the number of database entries the more probable the next received player and his set of preferences will find a matching game partner. The data can be stored for a longer period of time or may be deleted after a group of players has been able to be set up.

By comparing received and stored preference data with the preference data of said at least one other user a plurality of users having matching preference data will be determined. In case of a game this is necessary to assure that the following game round will not be terminated too fast by a single superior player. The preference data can e.g. comprise a preferred game time as e.g. each Saturday from 8 to 10 P.M. It is also possible to evaluate the similarity of slightly differing preferences, to enable the start of a game even in case of not totally matching preferences. The degree of matching may also defined by a user within the preference data.

Stored preference data may also be used to determine the best period of time (a preferred time of the day or the week) to perform an online game competition, as it is easily possible to use the stored data to determine the period with the probably highest number of willingly participating gamers. The preference data can also be related to the preferred game version or a preferred game level. The preference data can also be related to the preferred number of game partners for multiplayer games.

The server searches for groups of participants or users of at least two players having similar matching profiles. The number of online players required for a game may differ from two, as in the case of team sport games, which may comprise two different teams and may even employ a "referee" player.

The search may be performed repeatedly or only in case of a new set of received identification and preference data.

If a number of matching sets of preference data has been determined, the server sends a notification to each of said mobile terminals having matching user preference data. The notification may be accompanied with advertisements such as e.g. proposals for future game session events, such as online competitions.

The multiple access online application can be a distributed or a centralized application i.e. the application can be running separately on different terminal devices or be centralized as a server device application. The multiple access online application can be an online game, as the prevailing circumstances of online games require at least two participants in the game and an online capability. If a user is able to contact the game server it may be expected that he or his terminal device fulfill all requirements to participate in the game. The multiple access online application can be any kind of online application that performs best with at least two users accessing an application that do not know each other.

The stored preference data propose that users who want to participate in multi user online applications such as an online game enroll themselves automatically upon the insertion of said memory module at a server and declare their preferences to said server. Therefore, the server can, in case of enough matching preferences with one or more other players, send an invitation or a rendezvous address for starting said online application. If enough players take the invitation (or a respective challenge) the game can start.

The invention proposes that the potential participants of a multiple access online application such as an online game session shall send their intention to participate and desired type of application to a server and the server saves this information in a database. When another potential participant with the same interest is found the potential participants are informed e.g. by SMS and the application can be started by the participants or through the server.

In another example embodiment said interchangeable cellular memory device is a multimedia card. Thereby, a memory module with a standardized dimensions can be used without a need to develop new kinds of mechanic or electric interface structures. When using a standardized memory module it may be even possible to use terminal device for running a gaming application that have basically not been designed for such a kind of application, e.g. a communicator without the need to employ a dedicated adapter module. The MMC may store a multi-user enabled online application software, a server address or an address of another gaming device with or without an explicit user confirmation. This automated contacting of a server may be implemented by a script encapsulated in a MMS or (e.g. a WAP deck) stored in said memory device to automatically connect to a game server or another gaming device with or without an explicit user confirmation wherein said script can be stored in said interchangeable memory device.

In another example embodiment said cellular network application is a cellular network game. That is an implementation of an interchangeable cellular online game memory device, which on insertion into a respective terminal device may result into auto-start of a game in the device in an online mode, if corresponding setting is enabled.

In yet another example embodiment said interchangeable cellular memory device further comprises a storage that can store at least one cellular network game status. That represents an implementation of an interchangeable cellular online game memory device, combined with a memory card to store different game statuses in case of an offline game or even incase of an online game. The online game status storage application may not be easy to understand but in case of a game with a relative low number of possible parameters, an online game partner with an fitting game status may be found. In case of chess it might be a bit difficult to find only two matching game statuses, but incase of noughts and crosses it should be possible to always find a match.

However since gaming will provide much more to user if played in multiplayer-mode and operators are after revenues, the insertion of a valid MMC card could also send a signal to the network to start searching for gaming partner automatically.

A network system for enabling an automated access of multiple network terminal devices with inserted memory modules for a multiple access online application via wireless communication network by means of a network server is also provided. Said network system comprises network terminal device and memory module devices being connected to said wireless communication network and a network server being connected to said wireless communication network. The network system according to the present invention is characterized in that said network terminal devices are terminal devices according to the preceding description said memory modules are memory modules according to the preceding description and said network server is a network server is a network server according to the preceding description.

The term "matching" encompasses all kinds and degrees of similarity or fitting in the comparison between data and profiles. It specifically includes identical, similar and complementary profiles. The "complementary" encompasses all degrees and kinds of tolerable differences.

In the following, the invention will be described in detail by referring to the enclosed drawings in which:
Figure 1 depicts the implementation of the interchangeable memory device and a block diagram of a terminal device,
Figure 2 represents a signal flowchart between a memory device, a terminal device and a server device for according to one embodiment of the present invention,
Figure 3 represents a signal flowchart for according to one embodiment of the present invention,
Figure 4 shows a conventional star topology of terminal devices that are connected to a server, and
Figure 5 depicts an implementation of a network server for enabling access to a multiple access online application such as an online game.

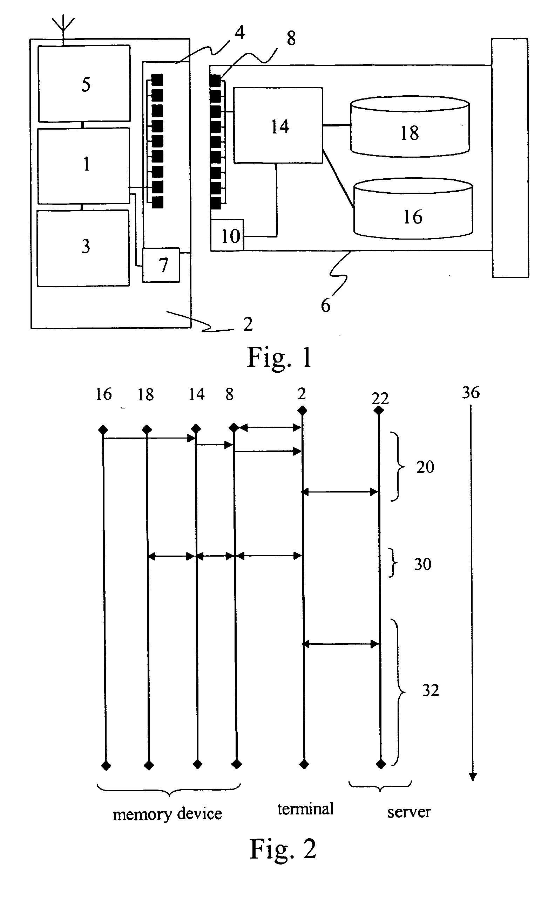

Figure 1 depicts a block diagram of an implementation of the interchangeable memory device and a block diagram of a terminal device. Figure 1 provides on the left side a mobile cellular communication terminal device 2, comprising a processor 1, a user interface 3 and a cellular network interface 5 that is marked with an antenna. The cellular terminal device 2, further comprises a memory module interface 4 and a memory module presence detector 7. The processor 1 is connected to the user interface 3, the cellular network interface 5, the memory module interface 4 and the memory module presence detector 7.

Figure 1 provides on the right side an interchangeable memory module 6 that comprises a memory module interface 8, an interface and memory controller depicted as the block 14, the data storage 16 and the data storage 18.

There may also be provided a terminal device detector 10 within the memory module, to determine if the memory device is actually inserted in a terminal or not. The terminal device detector 10 also connected to said interface and memory controller 14.

The processor 1 of the terminal device 2 can detect the insertion of a memory device 6 by the memory module detector 7, and can therefore start an action if and when a memory device is being connected to said interface 4. According to one embodiment of the present invention, said terminal device may retrieve automatically memory module data identifying said module. The read out device data may also comprise script that may be executed at the processor. In an implementation according to the present invention said script pulls out server address data. The script may induce the processor to contact said server address via said cellular interface 5. The script and the server address may be stored in the memory controller or in storage 16 or storage 18. Simultaneously or subsequently the script can load and start an application software e.g. a terminal executable multiplayer game to said processor 1 via the interfaces 8 and 4.

When these actions are induced by the terminal 2, upon the detection of a presence of a memory via the detector 7 the method may be described as a pulling of data from the memory device 6. When these actions are induced by the memory device 6, upon the detection of a presence of a memory via the detector 10, the method may be described as a pushing of data from the memory device 6.

In the interchangeable memory device 6 a storage 18 and storage 16 are depicted. Even though both storages may be implemented in a single chip, different possible properties and functions may distinguish them. One storage can be a permanent storage (e.g. ROM) and one other storage may be implemented as a multiple access storage (e.g. a RAM). Thus into one storage e.g. updates, applets, service packs, or even new or altered server addresses may be stored or downloaded, while into the permanent storage e.g. the game ID, serial number of the memory device or the applications software itself may be downloaded. When using this approach it is also possible to allocate a part of said writeable memory for storing one or more game statuses providing a memory card functionality, so a user has no longer to write down or memorize level codes for accessing a previously reached game level. The writeable memory can also be used to store the preference profile of a user for an online game.

Access rights for the terminal, the server and or the user may also distinguish the storage 16 and the storage 18.

Figure 2 represents a signal flow chart according to one embodiment of the present invention. In the figure, the vertical lines 16, 18 14 and 8 represent an interchangeable memory device, the line 2 represents a mobile terminal device and the line 22 represents a cellular online server. The line 36 represents the time-axis in the diagram.

In the memory device the lines 16 and 18 represent different storages, the line 14 represents a controller and the line 8 represents an interface. Method starts with the connection of the interchangeable memory module via the interface 8 to the terminal device 2, indicated by the first horizontal double arrow. In a next step a server address information is retrieved from the storage 16 and transferred via the storage controller 14 and via the interface to the terminal device 2. The terminal device uses the received server address to contact a cellular network server 22 via a cellular network. This inserting of the memory device and retrieving of the address and connecting said address referred to by the bracket 20 represents the minimum functionality of the present invention. It may also be possible that the server address may be retrieved from a memory device in the terminal, to speed up the process of connecting the server, in this case the server address may have been mirrored from the memory module to the terminal device during a previous insertion.

It may be assumed in the following that the example in the figures deals with multiplayer online gaming. Cellular network multiplayer gaming requires basically three items. Games themselves are the most important. Game servers 22 offer the possibility to run multiplayer games (may be integrated in one of the user terminals). The other players are needed as well.

Communication within the bracket 30 represents the loading of a terminal game software from the storage 18 via the storage controller and the interface 8 of the memory device to the terminal device 2.

When the software has been downloaded the online game may begin in an online terminal server mode. It may be noted that in this example no measures have been taken to connect the user to other online player.

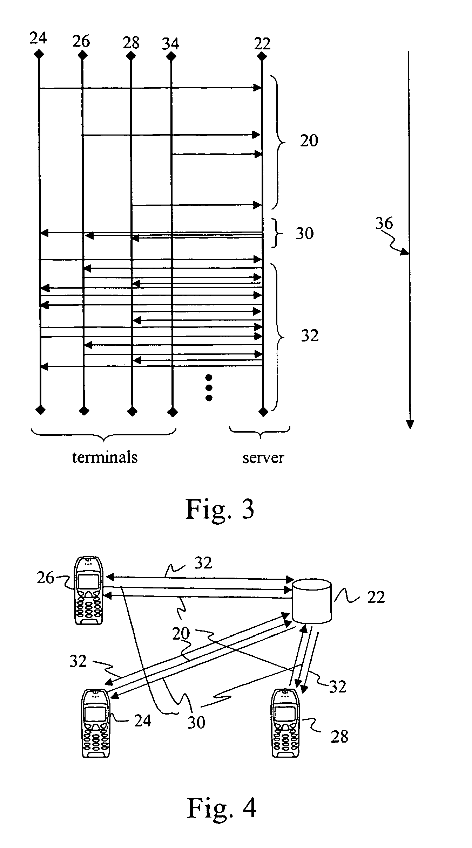

Figure 3 represents a signal flowchart for according to one embodiment of a extension of the present invention. In the figure, the vertical lines 22, 24, 26, 28 and 34 represent different devices. The line 36 represents the time-axis. The devices 24, 26, 28 and 34 can represent terminal devices according to figure 1 with inserted interchangeable memory modules 6. The device 22 represents a cellular network server. The server 22 may act as a game server (running a game application) or a mediation server (arranging that a user can contact a game server or other users to start an online game).

The users enroll themselves at the mediation server 22 during the section marked with the reference numeral 20' and declare or transmit their preference data (and ID data) to the server 22.

So the example in the figures deal with multiplayer online gaming. Cellular network multiplayer gaming requires basically three items. Games themselves are the most important. Game servers offer the possibility to run multiplayer games (may be integrated in on eof the user terminals). The other players are needed as well.

The method described in the figure intends to help individual players to find each other. There may very easily be situations where a potential multiplayer does not end up having multiplayer game simply because there are currently no available players registered to the server. This might be a problem especially if the game servers are run by fragmented market and every participant can register only to a specific server. Especially when using online games provided by a software company the marked may be de-fragmented as every participant automatically registers automatically only to a game specific server. This may also enable a scenario where users of different consoles of different manufacturers can compete against each other in a single online game running on the server of a software company. In this case the ID data and or the preference data may be used to define the protocol and the data formats for the data exchange. Especially in the beginning, when the biggest boost is needed, there will not be too many players with devices of different manufacturers it is most beneficial fort the online gaming if all potential players can participate in online gaming.

It is assumed that the users or CNG-players usually do not know other potential CNG-players. Therefor, one object of the present invention resides in that a server 22 should know which persons are interested in playing and what their preferences for playing are. It is assumed that the users of the terminal devices 24 26 and 28 want to play scat and have basically matching preference data. It is also assumed that the user of the terminal devices 34 wants to play a multi player adventure game.

According to the invention participants for an online game session send their gaming intention and wanted game to a server and the server saves this information in a database. This may be performed e.g. via a direct WAP connection to the mediating server 22.

Scat, as a game requires three players. After the user/terminal 24 has been automatically enrolled upon the insertion of a memory device its sends its data to the server 22, and the server just stores these data (assuming that no other scat players are already enrolled). There are different parameters defined by the player, for example when he wants to play, what game he wants to play, which level of difficulty, which method of connection etc.

The next user enrolling himself at the server is user terminal 24, also a user wanting to play scat with matching preferences. The user insets his memory device into his terminal device and automatically enrolls himself at the server 22. Scat as game requires three players, and therefore the critical number of players for starting the game has not yet been reached. The server may inform the terminal devices 24 and 26 via a notification that the probability that a game may soon be started as the number of players has increased, and only one additional player is required.

A user 34 may insert a multiplayer adventure game and is automatically connected to the server 22. It may be expected that no matching preferences can be found and the data of 24 are stored in the server. The preferences received from 34 are not matching with the preferences received from the terminals of 24 and 26. Thus no extra action may b performed. It is also possible that the server sends a notification to the phone of user 34 suggesting him to play scat instead of waiting, as there are two (potential) scat players waiting for the "third man". It is further assumed that user 34 is not interested in scat. Subsequently the server 22 waits for another enrolling player.

The next user enrolling is player 28 transferring matching preferences for playing scat. It may not be necessary that all users a are enrolled automatically upon the insertion of a memory device. The server checks the preference data and determines that the number of players with matching preferences is high enough to start a game.

Then the server does perform the matching operation between different players and sends a connection request to the players if they would like to have a game. Subsequently the server sends notifications 30 to each of the terminals 24, 26, 28 to notify them that a group of enough players to start a game has been found. In the depicted example the notifications may further comprise at least one address of one of the other players, so a user can set up a connection to start the game by sending e.g. an notification such as an SMS to one of the other players.

If all players want to start a game, they can contact the server to start playing the game via a wireless network such as a cellular telephone network.

The notifications 30 can also be regarded as an invitation to participate in a game. Similarly the invitation can comprise an "admission ticket" in form of an entrance code an entrance script or the like that may grant access to a dedicated game server. If all the invited players accept the invitation the game or the competition can start.

When another player with the same game interest is found the players are informed, e.g. via SMS, and the game can be started by the players or through the server. When other player with the same game interest is found the players are e.g. informed by MMS and the game can be started automatically by confirmation of the players through the server.

In the depicted server based version the CNG software is located and operated at and by the server. The CNG software can be located e.g. in an MMC (Multi Media Card) inserted in the mobile terminal. The CNG software may be downloaded from a server 22 to said terminal or to an MMC card inserted in the mobile terminal. The server is needed and therefore, the terminals 24, 26, 28 may only communicate with the server.

It is also possible that terminals 24, 26, 28 play a terminal-based version (not depicted) wherein the CNG software is located and operated at and by the terminals. In this case the server is not needed and therefore, the terminals 24, 26, 28 communicate only among themselves.

To demonstrate further implementations of actions that may be performed when contacting a server a few possible actions following the connecting to a server are outlined in the following. A contacted server may grant access to each of said notified mobile terminals to said multiple access online application by a server, if and when said multiple access online application is running on said server. This application is especially useful if the multiple access online application is running on the server itself, therefore the server can manage the access rights and the start of an application such as a game round automatically. In case of the online game application the insertion of a memory device into said terminal device would induce the server to start a game, select a virtual environment or may allocate different kind of virtual equipment to the players. It may be noted that especially in case of wireless communication networks a device can be connected to the network without being actually exchanging data with any devices also being connected to said network. Therefore, the ID data and the preference data may be transferred to the server via a messaging system even without a need for a permanent connection.

The ID and preference data may be transferred via GPRS (general packet radio service), MMS (multi media messaging), via SMS (short message service), or any other suitable messaging system.

Server may further access said application according to said received data to enable an access to said multiple access online application. The elements of sending and receiving data and messages or notifications are only required for terminal devices that are connected to said wireless communication network. The accessing of said application in contrast requires a setting up of a direct connection to the device providing said multiple access online application (in ace of a server-based application).

It can be seen that the server side i.e. the selection of competitors or game partners and the terminal side of the method the automated set up to an online game complete each other.

The notification may be performed via a short message (SM) or via a multimedia message (MMS). The contacting of the server or the transfer of preference data may also be performed via short message (SM) or via multimedia message (MMS).

Figure 4 shows a conventional star topology of terminal devices being connected to a server. The depicted star topology comprises a number of terminal devices 24, 26, 28 and a central server 22. According to the invention the single terminal devices 24, 26, 28 each enrolls 20' themselves independently and automatically at the mediating server 22. In the description of the figures the server 22 is denoted as 'mediating server' to emphasize that the task of said server resides in bringing together different potential online application users. During the enrollment 20' the terminals each transfer usually subsequently an intention to play e.g. skat (a card game for three participants). This game is chosen as an example as its software complexity is low and it may be played even on devices having relatively low processing power. The mediating server 22 sends a message to each of said terminal devices 24, 26, 28 when three players with approximately the same preferences have been found.

The mediating server 22 may also comprise a game server functionality for the game of scat that may therefore be played via exchanged data between the server and the terminals. In the depicted case, the terminal devices 24, 26, 28 are represented by mobile telephones and the communication lines 20' 30' are provided by e.g. the mobile telephone network and the game server 22 is a centralized mobile telephone network game server. In this case, the terminal devices represent the game controllers of a (scat) video game. The star topology is based on the idea that a single simulation is running in one place and the terminal devices exchange just the moves of the players and are not running a simulation itself. A single program running a single game server characterizes the star topology. The star topology corresponds to a hierarchical structure, wherein the server is the master and the terminal devices represent the slaves.

The presented usage case is related to a multi party game offered and arranged e.g. in a cellular telephone network. The actual game logic and an intelligent component is located in the server 22 which controls the game flow and ensures the data exchange 20' between different game partners 24, 26, 28. The server controls also the status of connection of the clients (mobile gaming users). If one client gets out of coverage or range (temporarily or permanently) the server can recognize it within a reasonable time period. This time period will of course depend on the type of the game. Turn-by-turn games like e.g. chess or scat can tolerate a longer period in comparison with fast shooting or jump and run games.

Another usage scenario deals with multi party games that are initiated by one mobile gaming partner using a wireless communication means for game data exchange purposes. The wireless means could be Bluetooth, GPRS (general packet radio service), UMTS (Universal Mobile Telephone Standard), Wireless LAN (Local Area Network), infra red and the like. No matter which connectivity means is used for such a gaming party, one of the game partner has to act as a server and control the data exchange between different partners. The gaming device acting, as server 22 for such game, will play the same role as the network based (centralized) server 22, described in the above paragraph. The usage of short-range communication paths may be applicable to detect a gaming partner when an interchangeable memory is inserted in crowded places. The usage of short-range communication paths is also applicable in case that two matching players are detected in the same network cell, to enable a bypassing of the cellular network by using a direct short range player-to-player connection.

The devices of figure 4 may also be operating a distributes game, after the mediating server has sent messages to each of said terminal devices 24, 26, 26. The message comprised the cellular communication addresses (e.g. the telephone numbers) to set up a direct connection between the players to play a game. The server has selected the players according to the number of required players (i.e. three), the preferred time period of playing and the estimated gaming strength, coded in the preference data. The scat game is also played with a star topology that comprises a number of terminal devices 24, 26, and 26 being interconnected, wherein e.g. the terminal 28 may represent the game server. According to different embodiments this topology can also be embodied as a number of game enabled phone devices being interconnected via telephone or short-range radio. As one of the alternatives to the star topology an interwoven structure is also possible, which is characterized by a distributed game program exchanging only the moves between the single interface devices. So there may be an additional connection between the terminals 24 and 26. It is also possible to build up (one-way) ring structures.

All the described topologies have in common, that a multi-player game requires a minimum of required players to be started. The present invention provides a method to bring together player (that do not know each other) that want to participate in an online game.

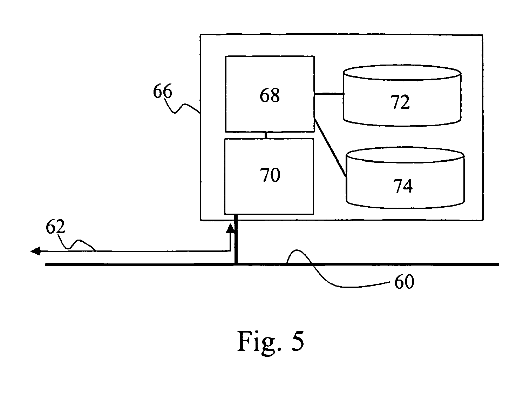

Figure 5 depicts an implementation of a network server for enabling access to a multiple access online application such as an online game. Within the server 66 there is provided a database of players 72, 74. The players would enter 62 the data via their mobile, e.g. using WAP services. The players could enter the data via their mobile, e.g. using SMS or MMS services. The messages or data of the users (comprising the user IDs and preference data) are received via a communication network 60 e.g. the hard wired part of a cellular telephone communication network via a modem or a network interface 70.

The processor 68 stores the received data in a database. The database of players may be divided into a player ID database 72 and a preferences database 74. A processor 68 of the server 66 takes care of the databases 72 and 74, and matches are searched when appropriate. The matches may only be searched for in the preference database 74. When a match is found a notification e.g. in form of an SMS or an MMS will be sent to the registered participants. The notifications or messages can comprise an information that a game can possibly be started under the conditions entered to the preferences database and that the player can join or start the game if suitable. The algorithm for matching the gamers or their preferences is not described in detail here. The algorithm for matching the gamers probably would have to include for 2 player games few more candidates before actually sending the request because people are not necessarily available even if they have entered such a data into database.

To demonstrate further implementations of actions that may be performed when contacting a server a few possible actions following the connecting to a server are outlined in the following. A contacted server may grant access to each of said notified mobile terminals to said multiple access online application by a server, if and when said multiple access online application is running on said server. This application is especially useful if the multiple access online application is running on the server itself, therefore the server can manage the access rights and the start of an application such as a game round automatically. In case of the online game application the insertion of a memory device into said terminal device would induce the server to start a game, select a virtual environment or may allocate different kind of virtual equipment to the players. It may be noted that especially in case of wireless communication networks a device can be connected to the network without being actually exchanging data with any devices also being connected to said network. Therefore, the ID data and the preference data may be transferred to the server via a messaging system even without a need for a permanent connection. The ID and preference data may be transferred via GPRS (general packet radio service), MMS (multi media messaging), via SMS (short message service), or any other suitable messaging system.

Server may further access said application according to said received data to enable an access to said multiple access online application. The elements of sending and receiving data and messages or notifications are only required for terminal devices that are connected to said wireless communication network. The accessing of said application in contrast requires a setting up of a direct connection to the device providing said multiple access online application (in ace of a server-based application).

It can be seen that the server side i.e. the selection of competitors or game partners and the terminal side of the method the automated set up to an online game complete each other.

The notification may be performed via a short message (SM) or via a multimedia message (MMS). The contacting of the server or the transfer of preference data may also be performed via short message (SM) or via multimedia message (MMS).

The wireless communication network game can mainly be located at a server or in the terminals.

In the server-based version the CNG software is located and operated at and by a server. In this case the terminals act basically as a remote control for a game application running at the server. The terminals act like the controllers and the screen of a video game, the wireless communication network functions as the controller cable and the TV cable and the server acts as the video game console running the game application. In this scenario the players may change the settings of the game before it is started.

In the terminal based version the CNG software is located and operated at and by the terminals. The CNG software can be located e.g. in an MMC card inserted in the mobile terminal. The CNG software may be downloaded from a server to said terminal or to an MMC card inserted in said mobile terminal.

In the case of the terminal-based version of the CNG, the server may only act as a relay station forwarding the moves of the participating players between the terminals, wherein each of the terminals create their own scenario in a (basically independent) way.

In this case it is possible that the contact to the server may only have the function to induce the first contact between the players, and subsequently the terminals connect each other directly via the wireless communication network, a cellular telephone network or even Bluetooth to start the game, bypassing the server. This may also be performed automatically upon the insertion of the memory device into said terminal.

It is also possible that the devices automatically contact a mediating server only to induce the first contact between the players and e.g. a remote application or game server and that the terminals connect each other directly to a dedicated game server, or the mediating server hands over the group of users to a dedicated game server.

The terminal device may be configured by the memory device to send a preference profile including ID data and preference data stored in said internal database via said network to a server. Said processor is further configured to receive a notification from said server comprising an offer to get access to said multiple access online application according to said sent data in said preferences profile. The received notification comprises data to enable an access of said mobile terminal device to said multiple access online application.

An element of invention resides in that the game is automatically multiplayer-started when proper media is inserted.

Another element of the invention resides in the fact that there is a way to register player into a mediating or a game server, and that the server is able to send notifications based on data in the database.

The invention improves the usability of online applications such as online games and is therefore important any multiplayer gaming business.

This application contains the description of implementations and embodiments of the present invention with the help of examples. A person skilled in the art will appreciate that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims.

## Claims

1. Method for automatically connecting a mobile terminal device (2) to a remote cellular network server (22) having a network address, said mobile terminal device (2) having an interface for connecting an interchangeable memory (6) and having a cellular network interface (5), the method comprising
- detecting an operative connection of the interchangeable memory (6) to said mobile terminal device (2), wherein said network address of said server (22) is stored in said interchangeable memory (6), and
**characterized by**
responsive to the detection of said operative connection
- retrieving said network address of said server (22) from said interchangeable memory (6); and
- automatically setting up a connection to said server (22) at said network address via said cellular network interface.

2. Method according to claim 1, comprising
- activating a cellular network application being stored on said interchangeable memory (6) in an online mode.

3. Method according to claim 2, wherein said interchangeable memory (6) contains application id data of said cellular network application and said method comprises retrieving said application id data and transferring said application id data to said connected server (22).

4. Method according to claim 2 or 3, further comprising obtaining of preference data of a user for said cellular network application, and storing said preference data within said interchangeable memory (6).

5. Method according to claim 2, 3, or 4, further comprising retrieving of preference data of a user for said cellular network application stored in said interchangeable memory (6), and transferring said preference data to said connected server (22).

6. Method according to anyone of the claims 2 to 5, wherein said cellular network application is a cellular network game.

7. Method according to claim 6, further comprising determining of game status data of said cellular network game, and storing said data in said interchangeable memory (6).

8. Method according to claim 6 or 7, further comprising retrieving of game status data of a user for said cellular network game stored in said interchangeable memory (6), and transferring said preference data to said connected game server (22).

9. Computer program product comprising program code means stored on a computer readable medium for carrying out the method of anyone of claims 1 to 8 when said computer program product is run on a computer or network device.

10. Mobile terminal device (2) for automatically connecting to a remote cellular network server (22) having a network address, comprising:
- a cellular network interface (5);
- a user interface (3);
- a processor (1) being connected to said network interface (5) and said user interface (3);
- an interface (4) adapted for connecting to an interchangeable memory (6) comprising said network address of said server (22) and a cellular network application;
- a detector (7) adapted for detecting an operative connection of said interchangeable memory (6) to said mobile terminal device (2) ;
**characterized by**
- a component adapted to retrieve said network address of said server (22) from said interchangeable memory (6) in response to the detected operative connection ; and
- a component for automatically connecting to said server (22) at said network address via said cellular network interface (5) in response to the detected operative connection.

11. Mobile terminal device (2) according to claim 10, wherein said mobile terminal device (2) is further configured to retrieve application id data of said cellular network application stored in said connected interchangeable memory (6) and transferring said application id data to said connected server (22).

12. Mobile terminal device (2) according to claim 10 or 11, wherein said mobile terminal device (2) is further configured to operate said cellular network application of said interchangeable memory (6) if and when an operative connection of said interchangeable memory (6) is detected.

13. Mobile terminal device (2) according to anyone of claims 10 to 12, wherein said interface (4) for connecting the interchangeable memory (6) is an interface of a multimedia card.

14. Mobile terminal device (2) according to anyone of claims 11 to 13, wherein said cellular network application is a cellular network game.

## Patentansprüche

1. Verfahren zum automatischen Verbinden einer mobilen Endgeräte-Vorrichtung (2) mit einem entfernten Server (22) eines zellularen Netzwerks, der eine Netzwerkadresse aufweist, wobei die mobile Endgeräte-Vorrichtung (2) eine Schnittstelle zum Verbinden mit einem austauschbaren Speicher (6) und eine zellulare Netzwerkschnittstelle (5) aufweist, wobei das Verfahren umfasst
- Erfassen einer betriebsfähigen Verbindung des austauschbaren Speichers (6) mit der mobilen Endgeräte-Vorrichtung (2), wobei die Netzwerkadresse des Servers (22) in dem austauschbaren Speicher (6) gespeichert ist; und
**gekennzeichnet durch**
in Reaktion auf die Erfassung der betriebsfähigen Verbindung
- Abrufen der Netzwerkadresse des Servers (22) von dem austauschbaren Speicher (6); und
- automatisches Einrichten einer Verbindung mit dem Server (22) an der Netzwerkadresse über die zellulare Netzwerkschnittstelle.

2. Verfahren nach Anspruch 1, umfassend
- Aktivieren einer zellularen Netzwerkanwendung, die auf dem austauschbaren Speicher (6) gespeichert ist, in einem Online-Modus.

3. Verfahren nach Anspruch 2, wobei der austauschbare Speicher (6) Anwendungs-ID-Daten der zellularen Netzwerkanwendung enthält und das Verfahren das Abrufen der Anwendungs-ID-Daten und Übertragen der Anwendungs-ID-Daten an den verbundenen Server (22) umfasst.

4. Verfahren nach Anspruch 2 oder 3, weiter umfassend Erhalten von Präferenzdaten eines Benutzers für die zellulare Netzwerkanwendung, und Speichern der Präferenzdaten in dem austauschbaren Speicher (6).

5. Verfahren nach Anspruch 2, 3 oder 4, weiter umfassend Abrufen von Präferenzdaten eines Benutzers für die zellulare Netzwerkanwendung, die in dem austauschbaren Speicher (6) gespeichert sind, und Übertragen der Präferenzdaten an den verbundenen Server (22).

6. Verfahren nach irgendeinem der Ansprüche 2 bis 5, wobei die zellulare Netzwerkanwendung ein zellulares Netzwerkspiel ist.

7. Verfahren nach Anspruch 6, weiter umfassend Bestimmen von Spielstatusdaten des zellularen Netzwerkspiels, und Speichern der Daten in dem austauschbaren Speicher (6).

8. Verfahren nach Anspruch 6 oder 7, weiter umfassend Abrufen von Spielstatusdaten eines Benutzers für das zellulare Netzwerkspiel, die auf dem austauschbaren Speicher (6) gespeichert sind, und Übertragen der Präferenzdaten an den verbundenen Spielserver (22).

9. Computerprogrammprodukt, umfassend Programmcodemittel, die auf einem computerlesbaren Medium gespeichert sind, zum Ausführen des Verfahrens nach irgendeinem der Ansprüche 1 bis 8, wenn das Computerprogrammprodukt auf einem Computer oder einer Netzwerkvorrichtung ausgeführt wird.

10. Mobile Endgeräte-Vorrichtung (2) zum automatischen Verbinden mit einem entfernten Server (22) eines zellularen Netzwerks, der eine Netzwerkadresse aufweist, umfassend:
- eine zellulare Netzwerkschnittstelle (5);
- eine Benutzerschnittstelle (3);
- einen Prozessor (1), der mit der Netzwerkschnittstelle (5) und der Benutzerschnittstelle (3) verbunden ist;
- eine Schnittstelle (4), die zum Verbinden mit einem austauschbaren Speicher (6) angepasst ist, der die Netzwerkadresse des Servers (22) und eine zellulare Netzwerkanwendung umfasst;
- einen Detektor (7), der zum Erfassen einer betriebsfähigen Verbindung des austauschbaren Speichers (6) mit der mobilen Endgeräte-Vorrichtung (2) angepasst ist;
**gekennzeichnet durch**
- eine Komponente, die angepasst ist, in Reaktion auf die erfasste betriebsfähige Verbindung die Netzwerkadresse des Servers (22) von dem austauschbaren Speicher (6) abzurufen; und
- eine Komponente zum automatischen Verbinden mit dem Server (22) an der Netzwerkadresse über die zellulare Netzwerkschnittstelle (5) in Reaktion auf die erfasste betriebsfähige Verbindung.

11. Mobile Endgeräte-Vorrichtung (2) nach Anspruch 10, wobei die mobile Endgeräte-Vorrichtung (2) weiter konfiguriert ist, Anwendungs-ID-Daten der zellularen Netzwerkanwendung abzurufen, die in dem verbundenen austauschbaren Speicher (6) gespeichert sind, und die Anwendungs-ID-Daten an den verbundenen Server (22) zu übertragen.

12. Mobile Endgeräte-Vorrichtung (2) nach Anspruch 10 oder 11, wobei die mobile Endgeräte-Vorrichtung (2) weiter konfiguriert ist, die zellulare Netzwerkanwendung des austauschbaren Speichers (6) auszuführen, falls und wenn eine betriebsfähige Verbindung des austauschbaren Speichers (6) erfasst ist.

13. Mobile Endgeräte-Vorrichtung (2) nach irgendeinem der Ansprüche 10 bis 12, wobei die Schnittstelle (4) zum Verbinden des austauschbaren Speichers (6) eine Schnittstelle einer Multimedia-Karte ist.

14. Mobile Endgeräte-Vorrichtung (2) nach irgendeinem der Ansprüche 11 bis 13, wobei die zellulare Netzwerkanwendung ein zellulares Netzwerkspiel ist.

## Revendications

1. Procédé de connexion automatique d'un dispositif de terminal mobile (2) à un serveur de réseau cellulaire à distance (22) possédant une adresse de réseau, ledit dispositif de terminal mobile (2) possédant une interface destinée à connecter une mémoire interchangeable (6) et possédant une interface de réseau cellulaire (5), le procédé comprenant l'étape consistant à :
- détecter une connexion opérationnelle de la mémoire interchangeable (6) audit dispositif de terminal mobile (2), dans lequel ladite adresse de réseau dudit serveur (22) est stockée dans ladite mémoire interchangeable (6), et
**caractérisé par**, en réponse à la détection de ladite connexion opérationnelle, les étapes consistant à :
- récupérer ladite adresse de réseau dudit serveur (22) à partir de ladite mémoire interchangeable (6) ; et
- établir automatiquement une connexion audit serveur (22) à ladite adresse de réseau par l'intermédiaire de ladite interface de réseau cellulaire.

2. Procédé selon la revendication 1, comprenant l'étape consistant à :
- activer une application de réseau cellulaire stockée sur ladite mémoire interchangeable (6) dans un mode en ligne.

3. Procédé selon la revendication 2, dans lequel ladite mémoire interchangeable (6) contient des données d'id d'application de ladite application de réseau cellulaire et ledit procédé comprend les étapes consistant à récupérer lesdites données d'id d'application et transférer lesdites données d'id d'application audit serveur connecté (22).

4. Procédé selon la revendication 2 ou 3, comprenant en outre les étapes consistant à obtenir des données de préférence d'un utilisateur pour ladite application de réseau cellulaire, et stocker lesdites données de préférence à l'intérieur de ladite mémoire interchangeable (6).

5. Procédé selon la revendication 2, 3, ou 4, comprenant en outre les étapes consistant à récupérer des données de préférence d'un utilisateur pour ladite application de réseau cellulaire stockées dans ladite mémoire interchangeable (6), et transférer lesdites données de préférence audit serveur connecté (22).

6. Procédé selon une quelconque des revendications 2 à 5, dans lequel ladite application de réseau cellulaire est un jeu de réseau cellulaire.

7. Procédé selon la revendication 6, comprenant en outre les étapes consistant à déterminer des données d'état de jeu dudit jeu de réseau cellulaire, et stocker lesdites données dans ladite mémoire interchangeable (6).

8. Procédé selon la revendication 6 ou 7, comprenant en outre les étapes consistant à récupérer des données d'état de jeu d'un utilisateur pour ledit jeu de réseau cellulaire stockées dans ladite mémoire interchangeable (6), et transférer lesdites données de préférence audit serveur de jeu connecté (22).

9. Produit-programme informatique comprenant des moyens de code de programme stockés sur un support lisible par ordinateur pour réaliser le procédé selon l'une quelconque des revendications 1 à 8 lorsque ledit produit-programme informatique est exécuté sur un ordinateur ou dispositif de réseau.

10. Dispositif de terminal mobile (2) de connexion automatique à un serveur de réseau cellulaire à distance (22) possédant une adresse de réseau, comprenant :
- une interface de réseau cellulaire (5) ;
- une interface d'utilisateur (3) ;
- un processeur (1) connecté à ladite interface de réseau (5) et à ladite interface d'utilisateur (3) ;
- une interface (4) adaptée pour se connecter à une mémoire interchangeable (6) comprenant ladite adresse de réseau dudit serveur (22) et une application de réseau cellulaire ;
- un détecteur (7) adapté pour détecter une connexion opérationnelle de ladite mémoire interchangeable (6) audit dispositif de terminal mobile (2) ;
**caractérisé par** :
- un composant adapté pour récupérer ladite adresse de réseau dudit serveur (22) à partir de ladite mémoire interchangeable (6) en réponse à la connexion opérationnelle détectée ; et
- un composant de connexion automatique audit serveur (22) à ladite adresse de réseau par l'intermédiaire de ladite interface de réseau cellulaire (5) en réponse à la connexion opérationnelle détectée.

11. Dispositif de terminal mobile (2) selon la revendication 10, dans lequel ledit dispositif de terminal mobile (2) est en outre configuré pour récupérer des données d'id d'application de ladite application de réseau cellulaire stockées dans ladite mémoire interchangeable connectée (6) et transférer lesdites données d'id d'application audit serveur connecté (22).

12. Dispositif de terminal mobile (2) selon la revendication 10 ou 11, dans lequel ledit dispositif de terminal mobile (2) est en outre configuré pour faire fonctionner ladite application de réseau cellulaire de ladite mémoire interchangeable (6) si et lorsqu'une connexion opérationnelle de ladite mémoire interchangeable (6) est détectée.

13. Dispositif de terminal mobile (2) selon une quelconque des revendications 10 à 12, dans lequel ladite interface (4) destinée à connecter la mémoire interchangeable (6) est une interface d'une carte multimédia.

14. Dispositif de terminal mobile (2) selon une quelconque des revendications 11 à 13, dans lequel ladite application de réseau cellulaire est un jeu de réseau cellulaire.
